# EUROPÄISCHE PATENTSCHRIFT

(11) **EP 4 412 967 B1**
(45) Veröffentlichungstag und Bekanntmachung des Hinweises auf die Patenterteilung: **11.03.2026**
(21) Anmeldenummer: 22792751.4
(22) Anmeldetag: 04.10.2022
(51) Int. Cl.: C04B 7/47

(54) **VERFAHREN UND ANLAGE ZUR HERSTELLUNG VON ZEMENTKLINKER**
PROCESS AND PLANT FOR PRODUCING CEMENT CLINKER
PROCÉDÉ ET INSTALLATION DE PRODUCTION DE CLINKER DE CIMENT

(30) Priorität: 04.10.2021 AT 507892021
(43) Veröffentlichungstag der Anmeldung: 14.08.2024
(73) Patentinhaber: Scheuch Management Holding GmbH, 4971 Aurolzmünster (AT)
(72) Erfinder: FELLNER, Thomas, 5145 Neukirchen an der Enknach (AT); LECHNER, Georg, 4920 Schildorn (AT); BARTEL, Christian, 5221 Lochen am See (AT); RIEDER, Constantin, 4810 Gmunden (AT)
(74) Vertreter: SONN Patentanwälte GmbH & Co KG
(86) Internationale Anmeldenummer: PCT/AT2022/060345
(87) Internationale Veröffentlichungsnummer: WO 2023/056495

(56) Entgegenhaltungen:
- WO-A1-2015/059547
- WO-A2-2010/025739
- CN-U- 210 855 854
- CN-U- 213 824 177

## Beschreibung

Die Erfindung betrifft ein Verfahren zur Herstellung von Zementklinker mit den Schritten:
Brennen von Rohmaterialien zu Zementklinker in einem Ofen,
Vorwärmen der Rohmaterialien mit Rauchgasen des Ofens.

Weiters betrifft die Erfindung eine Anlage zur Herstellung von Zementklinker, aufweisend:
einen Ofen zum Brennen von Rohmaterialien zu Zementklinker,
einen Vorwärmer zum Vorwärmen der Rohmaterialien mit Rauchgasen des Ofens.

Bei der Zementklinkerherstellung, wie beispielsweise in AT 14170 beschrieben, entstehen großvolumige Rauchgasströme, welche mit Schadstoffen wie Quecksilber und klimaschädlichen Treibhausgasen wie Kohlendioxid (CO2) belastet sind. Deshalb unterliegt der Betrieb von Zementwerken strengen Auflagen. Der Ausstoß von Schadstoffen und klimaschädlichen Treibhausgasen soll reduziert werden. Auch die Anforderungen an die Energieeffizienz werden laufend erhöht. Diesen Zielen stehen hohe Investitionskosten gegenüber, welche mit der Nachbehandlung großvolumiger Rauchgasströme einhergehen.

Die WO 2010/025739 A2 offenbart eine Methode zur Kühlung von heißen Gasen mit einem Kondensationswärmetauscher.

CN210855854 beschreibt ein Zementwerk, das eine Carbon-Capture-Einheit aufweist.

Die Erfindung setzt sich zum Ziel, die Nachbehandlung der Rauchgasströme der Zementklinkerherstellung zu vereinfachen.

Diese Aufgabe wird durch ein Verfahren nach Anspruch 1 und eine Anlage nach Anspruch 10 gelöst. Bevorzugte Ausführungsformen der Erfindung sind in den abhängigen Ansprüchen angegeben.

Das erfindungsgemäße Verfahren zur Herstellung von Zementklinker sieht folgenden Schritt vor:
Entfeuchten und Kühlen von Rauchgasen des Ofens mittels eines Kondensationswärmetauschers.

Dementsprechend verfügt die Anlage zur Zementklinkerherstellung über eine Entfeuchtungs- und Kühlungsstufe mit einem Kondensationswärmetauscher zum Entfeuchten und Kühlen von Rauchgasen des Ofens.

Somit werden in dem Ofen, insbesondere Drehrohrofen, entstandene Rauchgase dem Kondensationswärmetauscher zugeführt, mit welchem einerseits der Feuchtigkeitsgehalt der Rauchgase gesenkt wird und andererseits die Rauchgase abgekühlt werden. Dem Kondensationswärmetauscher wird eine Kühlflüssigkeit, insbesondere Kühlwasser, zugeführt, mit welcher die Rauchgase unter den Taupunkt, insbesondere unter den Wasserdampftaupunkt, abgekühlt werden, so dass die kondensierbaren Stoffe, insbesondere der Wasserdampf, kondensieren. Zu diesem Zweck weist der Kondensationswärmetauscher zumindest eine Wärmeaustauschwand, insbesondere aus Metall auf, über die der Wärmeaustausch zwischen den Rauchgasen und der Kühlflüssigkeit bewerkstelligt wird. Als Wärmetauscher kann ein Rohrbündelwärmetauscher vorgesehen sein. Je nach Ausführung kann der Rohrbündelwärmetauscher beispielsweise über ein Trennblech in zwei Kammern unterteilt sein. Dadurch kann die eine Kammer im Betrieb gewaschen werden und die andere Kammer kann für den Wärmeaustausch genutzt werden. Somit geben die Rauchgase nicht nur sensible Wärme, sondern auch latente Wärme an die Kühlflüssigkeit ab, welche durch den Wärmeaustausch entsprechend erwärmt wird. Die erwärmte Kühlflüssigkeit wird vom Kondensationswärmetauscher abgeleitet. Je nach Ausführung kann die erwärmte Kühlflüssigkeit zu einer Wärmesenke transportiert werden, an der die Wärme der Kühlflüssigkeit genutzt werden kann. Beim Durchströmen des Kondensationswärmetauschers entstehendes Kondensat, insbesondere Abwasser, wird abgeleitet und kann einer Wasseraufbereitung zugeführt werden. Der wesentliche Vorteil des erfindungsgemäßen Verfahrens liegt darin, dass die Nachbehandlung der Rauchgase nach dem Kondensationswärmetauscher erleichtert wird, weil die Volumenströme der Rauchgase durch die Entfeuchtung wesentlich reduziert wurden.

Im Stand der Technik, vgl. insbesondere die EP 1 946 006 B1, wurde der Einsatz eines Kondensationswärmetauschers für eine abliegende Anwendung bei der Biomasseverbrennung beschrieben. Mit dem Kondensationswärmetauscher wird bei diesem Stand der Technik eine Verbesserung des Wirkungsgrades angestrebt. Dafür wird gezielt Wasser in das heiße Abgas eingespritzt, um den Taupunkt des Abgases gezielt zu erhöhen, bevor das Abgas in den Kondensationswärmetauscher gelangt.

Demgegenüber wird bei einer Variante des erfindungsgemäßen Verfahrens kein zusätzliches Wasser von außen in den Rauchgasstrom eingespritzt, sondern es wird ausschließlich die in den Rauchgasen des Ofens bereits vorhandene Feuchtigkeit für die Kondensation genutzt.

Bei einer weiteren Variante des erfindungsgemäßen Verfahrens wird durch das Einsprühen von Wasser eine Abscheidung von Schadstoffen, wie sauren Gasen und Staub, erreicht. Weiters kann durch den höheren Wasseranteil im Abgas der (latente) Wärmeenergieaustrag am Kondensationswärmetauscher erhöht werden. Dies kann zu einer besseren Wärmenutzung aus dem Rauchgas führen.

Für die Zwecke dieser Offenbarung beziehen sich die Richtungsangaben, wie "vor", "nach", auf die Strömungsrichtung der Rauchgase.

Der Wasserdampftaupunkt hängt insbesondere von der Zusammensetzung des Rauchgases ab. Wenn die Rauchgase mittels des Kondensationswärmetauschers auf eine Temperatur von weniger als 50°C, insbesondere weniger als 45°C, beispielsweise weniger als im Wesentlichen 40°C, gekühlt werden, kann die gewünschte Kondensation der Rauchgase der Zementklinkerherstellung zuverlässig erreicht werden.

Bei einer besonders bevorzugten Ausführung wird zudem folgender Verfahrensschritt durchgeführt:
Reinigen der Rauchgase, beispielsweise mit einer Regenerativen Thermischen Oxidation (RTO) und/oder mit einer Rauchgasentschwefelung (DeSOx) und/oder einer Entstickung (DeNOx), vor dem Entfeuchten und Kühlen der Rauchgase mittels des Kondensationswärmetauschers. Im Stand der Technik sind verschiedene Ausführungen von Reinigungsstufen für das Reinigen der Rauchgase des Ofens bekannt. Somit können die Rauchgase gereinigt werden, bevor die Rauchgase mit Hilfe des Kondensationswärmetauschers entfeuchtet und dabei von einer Temperatur von 80°C bis 300°C, insbesondere im Wesentlichen 200°C, auf eine Temperatur von weniger als 50°C, insbesondere weniger als 45°C, beispielsweise weniger als 40°C abgekühlt werden.

Der Kondensationswärmetauscher ist vorteilhafterweise als Polizeistufe ausgebildet, mit welcher nach dem Reinigen verbliebene Anteile von sauren Gasen, insbesondere Schwefeldioxid (SO2) und/oder Chlorwasserstoff (HCl) und/oder Schwermetalle, insbesondere Quecksilber, in den Rauchgasen reduziert werden. Weiters kann eine Geruchsminderung und eine Entschwadung des Rauchgases erzielt werden.

Bei einer weiteren Ausführungsform kann das Entfeuchten und Kühlen der Rauchgase mittels des Kondensationswärmetauschers zwischen dem Vorwärmen und dem Reinigen der Rauchgase stattfinden. Zu diesem Zweck kann der Kondensationswärmetauscher zwischen einen Vorwärmer zum Vorwärmen der Rohmaterialien vor dem Eintritt in den Ofen und einer Reinigungsstufe zum Reinigen der Rauchgase aus dem Ofen geschaltet sein, so dass die Rauchgase nach dem Vorwärmer mittels des Kondensationswärmetauschers entfeuchtet und gekühlt werden, bevor die Rauchgase in die Reinigungsstufe eintreten. In einer weiteren Ausführungsvariante sind zwei Kondensationswärmetauscher vorgesehen, wobei der eine Kondensationswärmetauscher zwischen dem Vorwärmer und der Reinigungsstufe und der andere Kondensationswärmetauscher nach der Reinigungsstufe angeordnet ist.

Bei einer bevorzugten Ausführungsform werden die Rauchgase nach dem Entfeuchten und Kühlen mittels des Kondensationswärmetauschers in den Ofen rezykliert. Besonders vorteilhaft ist, dass das Volumen des Rauchgases nach der Kondensation verringert ist, wodurch die Dimensionen von nachgeschalteten Anlagekomponenten, wie Filter, Ventilator, Mühle und gegebenenfalls auch eine Rauchgasreinigungslinie reduziert werden können.

Erfindungsgemäß werden die Rauchgase nach dem Entfeuchten und Kühlen mittels des Kondensationswärmetauschers einer Carbon Capture and Utilization (CCU) bzw. Carbon Capture and Storage (CCS)-Einheit zur Abtrennung von Kohlendioxid zugeführt. Das Entfeuchten und Kühlen mit dem Kondensationswärmetauscher birgt den besonderen Vorteil, dass die Rauchgase beim Eintritt in die CCU/CCS-Einheit einen minimalen Wasseranteil bei niedrigen Temperaturen aufweisen, wodurch eine ausreichende Sorption des Kohlendioxids in der CCU/CCS-Einheit sichergestellt wird. Weiters kann mit dem Kondensationswärmetauscher der Anteil an sauren Gasen und Schwermetallen so weit reduziert werden, dass das Kohlendioxid (CO2) mit der CCU/CCS-Einheit wirksam abgetrennt werden kann.

Beim Eintritt in den Kondensationswärmetauscher weist das dem Ofen, vorzugsweise einem Drehrohrofen, entstammende Rauchgas bevorzugt einen Kohlendioxid (CO2-)Anteil von 10 bis 90 Volumenprozent (% v/v), insbesondere von 15 bis 30 % v/v auf. Alternativ, insbesondere bei einem Oxyfuel-Verfahren, kann das Rauchgas einen Anteil von mehr als 90 % v/v CO2 aufweisen.

Bei einer ersten bevorzugten Ausführungsform ist die CCU- bzw. CCS-Einheit zur Absorption von Kohlendioxid in einer Waschflüssigkeit eingerichtet. Somit kann das Kohlendioxid an der Waschflüssigkeit absorbiert werden. Als Wasch- bzw. Absorptionsflüssigkeit können Amine oder wässrige Lösungen von Kaliumhydroxid oder Aminosäuresalzen, organische Lösemittel wie Methanol oder Polyglycoldialkylether vorgesehen sein.Die CCU- bzw. CCS-Einheit weist bei einer bevorzugten Ausführung einen Aminwäscher auf. Der Aminwäscher weist bevorzugt einen Absorber und einen Desorber auf. In den Absorber werden eine wässrige Aminlösung und die Rauchgase eingeleitet. Durch die chemische Reaktion des absorbierten CO2 mit der Aminlösung wird Energie in Form von Wärme freigesetzt. Das gereinigte Rauchgas verlässt den Absorber. Die mit CO2 (und gegebenenfalls mit Resten anderer saurer Gase) beladene Aminlösung wird in den Desorber geführt. Im Desorber wird bei hoher Temperatur über den Einsatz von thermischer Energie und niedrigem Druck das chemische Gleichgewicht umgekehrt und somit das gebundene CO2 der Aminlösung entzogen. Somit kann das CO2 vom Desorber abgezogen werden. Durch einen Kondensator können Anteile an Aminlösung und Wasser vom CO2-Gasstrom abgetrennt und rückgeführt werden.

Bei einer weiteren bevorzugten Ausführungsform ist die CCU- bzw. CCS-Einheit zur Adsorption von Kohlendioxid an einem Feststoff eingerichtet.

Bei einer Variante ist die CCU/CCS-Einheit für ein trockenes Adsorptionsverfahren mit einem festen Sorbens, beispielsweise einem Zeolith, einem funktionalisierten Polymer oder einer metallorganischen Gerüstverbindung, eingerichtet. Bei einer weiteren Variante ist die CCU/CCS-Einheit für ein kryogenes Verfahren eingerichtet, bei dem das CO2 durch Desublimation oder Verflüssigung abgetrennt wird. Bei einer weiteren Variante ist die CCU/CSU-Einheit für ein Membranverfahren zur CO2-Abscheidung eingerichtet.

Bei den zuvor genannten Ausführungsformen ist es vorteilhaft, dass die Rauchgase zuvor abgekühlt wurden, beispielsweise von 200 °C auf eine niedrigere Temperatur von 40° C. Bei den kryogenen Verfahren kann der Kondensationswärmetauscher als erste von mehreren Kühlstufen ausgebildet sein. Die Entfeuchtung verhindert dabei die Bildung von Eis, welches zur Verstopfung der Apparaturen führen könnte. Auch bei der Verwendung temperaturempfindlicher Membranen oder Sorbentien ist das vorherige Kühlen des Rauchgas- bzw. Abgasstromes vorteilhaft. Generell gilt bei auf Sorption beruhenden Verfahren (sei es Absorption in Waschflüssigkeiten oder Adsorption an festen Sorbentien), dass die Sorption bei niedrigeren Temperaturen besser funktioniert, da es sich in der Regel um einen exothermen Prozess handelt. Sowohl bei Absorptions- als auch bei Adsorptionsverfahren kann ein Desorber vorgesehen sein, in welchem das CO2 wieder vom jeweiligen Sorbens getrennt wird. Die zur Desorption benötigte Energie kann in Form von Wärme bereitgestellt werden.

Beim Entfeuchten und Kühlen der Rauchgase mittels des Kondensationswärmetauschers gewonnene Wärme wird bevorzugt für die Desorption des Kohlendioxids herangezogen.

Zur Verbesserung der Energiebilanz ist es insbesondere günstig, wenn beim Entfeuchten und Kühlen der Rauchgase mittels des Kondensationswärmetauschers gewonnene Wärme für die Desorption des Kohlendioxids, vorzugsweise im Aminwäscher, herangezogen wird. Beispielsweise kann die Temperatur der erwärmten Kühlflüssigkeit vom Kondensationswärmetauscher über eine Wärmepumpe auf das erforderliche Temperaturniveau für die Desorption angehoben werden.

Das Rauchgas wird in Strömungsrichtung der Rauchgase nach dem Vorwärmer, insbesondere mit einem CO2-Gehalt von 10 bis 90 % v/v, insbesondere von 15 bis 30 % v/v, dem Kondensationswärmetauscher zugeführt, mit dem Kondensationswärmetauscher entfeuchtet und gekühlt und in Strömungsrichtung der Rauchgase gesehen darauffolgend der CCU/CCS-Einheit zugeführt.

Zusätzlich oder alternativ kann beim Entfeuchten und Kühlen der Rauchgase mittels des Kondensationswärmetauschers gewonnene Wärme zum Trocknen der Rohmaterialien und/oder eines Brennstoffs des Ofens herangezogen werden.

Die Anlage zur Herstellung von Zementklinker weist bevorzugt eine Rauchgasreinigungsstufe, insbesondere eine RTO- und/oder Entschwefelungsstufe auf, welche zwischen dem Vorwärmer und der Entfeuchtungs- und Kühlungsstufe geschaltet ist.

Bei einer besonders bevorzugten Ausführungsform weist der Kondensationswärmetauscher eine Zuleitung und Ableitung für eine Kühlflüssigkeit auf, wobei die Ableitung bevorzugt mit einer CCU/CCS-Einheit, vorzugsweise mit einem Aminwäscher, insbesondere mit einem Verdampfer eines Desorbers des Aminwäschers, verbunden ist.

Die Erfindung wird nachstehend anhand von in den Zeichnungen dargestellten Beispielen weiter erläutert.

Fig. 1 zeigt ein Funktionsschema einer Anlage bei welcher die Rauchgase nach einer Rauchgasreinigung mittels eines Kondensationswärmetauschers entfeuchtet und gekühlt werden, bevor die Rauchgase zur Trocknung der Rohmaterialien oder des Brennstoffs verwendet werden oder in den Drehrohrofen rezykliert werden.

Fig. 2 zeigt ein Funktionsschema einer erfindungsgemäßen Ausführungsform, bei welcher die entfeuchteten und gekühlten Rauchgase einer CCU/CCS-Einheit zur Abtrennung des Kohlendioxids zugeführt werden.

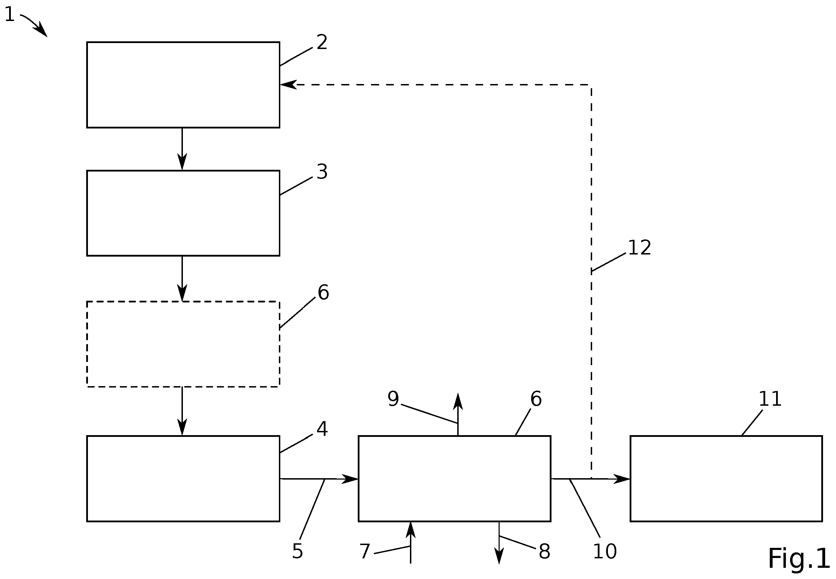

Fig. 1 zeigt eine Anlage 1 zur Herstellung von Zementklinker, welche Teil eines Zementwerks ist. Die Anlage 1 weist einen Ofen 2, insbesondere einen Drehrohrofen, auf, in welchem Rohmaterial, insbesondere Rohmehl, zu Zementklinker gesintert wird. Darüber hinaus ist ein Vorwärmer 3, insbesondere ein Vorwärmturm, vorzugsweise mit einer Zyklonkaskade mit mehreren hintereinander geschalteten Zyklonen (nicht gezeigt), vorgesehen. Im Vorwärmer 3 wird das Rohmaterial vor dem Eintritt in den Ofen 2 mit Hilfe von Rauchgasen des Ofens 2 vorgewärmt. Am oberen Ende des Vorwärmers 3 werden die Rauchgase abgezogen. Wie üblich weist die Anlage 1 eine Reinigungsstufe 4 auf, mit welcher die vom Vorwärmer 3 abgezogenen Rauchgase gereinigt werden können. Als Reinigungsstufe 4 kann beispielsweise eine RTO (Regenerative Thermische Oxidation)-Stufe vorgesehen sein. Die Rauchgase verlassen die Reinigungsstufe 4 mit Temperaturen von beispielsweise ca. 200°C (vgl. Pfeil 5).

In der gezeigten Ausführung werden die Rauchgase nach der Reinigungsstufe 4 einem Kondensationswärmetauscher 6 zugeführt, welcher eine Zuleitung 7 für eine Kühlflüssigkeit, vorzugsweise mit einer Temperatur von weniger als 20°C, und einer Ableitung 8 für die erwärmte Kühlflüssigkeit, vorzugsweise mit einer Temperatur von mehr als 40°C, aufweist. Darüber hinaus weist der Kondensationswärmetauscher 6 eine Abführung 9 für das Kondensat auf, welches bei der Kondensation der Rauchgase im Kondensationswärmetauscher 6 anfällt. Die Abführung 9 kann mit einer Wasseraufbereitungsstufe verbunden sein. Mittels des Kondensationswärmetauschers 6 werden die von der Reinigungsstufe 4 kommenden Rauchgase entfeuchtet und gekühlt. Bevorzugt beträgt die Temperatur der Rauchgase am Ausgang des Kondensationswärmetauschers 6 weniger als 40°C (vgl. Pfeil 10). Der Wärmegehalt der gereinigten, entfeuchteten und gekühlten Rauchgase kann mit Hilfe einer Trocknungsstufe 11 zum Trocknen beispielsweise der Rohmaterialien oder eines Brennstoffs herangezogen werden.

Zusätzlich oder alternativ können die Rauchgase nach dem Kondensationswärmetauscher 6 in die Zementklinkerherstellung, insbesondere in den Drehrohrofen, rezykliert werden (vgl. die strichlierte Linie 12). Diese Ausführung eignet sich insbesondere für das sogenannte Oxyfuel-Verfahren, bei dem die Rauchgase in den Ofen zurückgeleitet werden und zugleich reiner Sauerstoff zugeführt wird, um die Verbrennung aufrechtzuerhalten. Auf diese Weise steigt der CO2-Anteil in den Rauchgasen, wodurch das CO2-Abscheidungspotenzial maßgeblich erhöht wird. Die Rezirkulation der Rauchgase dient auch zum Transport der Wärme im Zementprozess.

In einer weiteren Ausführungsvariante kann der Kondensationswärmetauscher 6 zwischen dem Vorwärmer 3 und der Rauchgas-Reinigungsstufe 4 geschaltet sein, so dass die Rauchgase nach dem Vorwärmer 3 mittels des Kondensationswärmetauschers 6 entfeuchtet und gekühlt werden, bevor die Rauchgase in die Reinigungsstufe 4 eintreten.

In einer weiteren Ausführungsvariante sind zwei Kondensationswärmetauscher 6 vorgesehen, wobei der eine Kondensationswärmetauscher 6 zwischen Vorwärmer 3 und Reinigungsstufe 4 und der andere Kondensationswärmetauscher 6 nach der Reinigungsstufe 4 angeordnet ist.

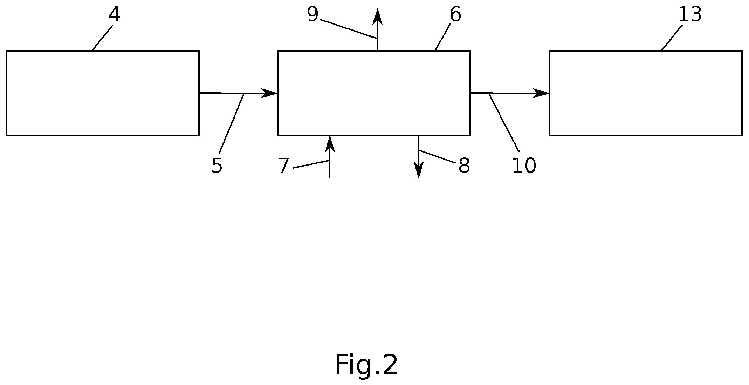

Fig. 2 zeigt eine alternative Ausführungsform, bei welcher die Rauchgase nach dem Entfeuchten und Kühlen mittels des Kondensationswärmetauschers einer Carbon Capture and Utilization (CCU) bzw. Carbon Capture and Storage (CCS)-Einheit 13 zugeführt werden. Diese CCU/CCS-Einheit 13 ist dazu eingerichtet, das Kohlendioxid in den Rauchgasen abzutrennen. In einer günstigen Ausführungsvariante weist die CCU/CCS-Einheit 13 einen Aminwäscher auf. Der Aminwäscher weist einen Absorber und einen Desorber auf, welcher mit der Ableitung 8 für die erwärmte Kühlflüssigkeit des Kondensationswärmetauschers 6 verbunden sein kann, um Wärme für die Desorption des Kohlendioxids von der Aminlösung zur Verfügung zu stellen.

## Patentansprüche

1. Verfahren zur Herstellung von Zementklinker mit den Schritten:
Brennen von Rohmaterialien zu Zementklinker in einem Ofen (2),
Vorwärmen der Rohmaterialien mit Rauchgasen des Ofens (2),
**gekennzeichnet durch**
Entfeuchten und Kühlen von Rauchgasen des Ofens (2) mittels eines Kondensationswärmetauschers (6), wobei die Rauchgase nach dem Entfeuchten und Kühlen mittels des Kondensationswärmetauschers (6) einer Carbon Capture and Utilization (CCU) bzw. Carbon Capture and Storage (CCS)-Einheit (13) zur Abtrennung von Kohlendioxid zugeführt werden.

2. Verfahren nach Anspruch 1, **dadurch gekennzeichnet, dass** die Rauchgase mittels des Kondensationswärmetauschers (6) auf eine Temperatur von weniger als 50°C, insbesondere weniger als 45°C, beispielsweise weniger als im Wesentlichen 40°C, gekühlt werden.

3. Verfahren nach Anspruch 1 oder 2, **gekennzeichnet durch**
Reinigen der Rauchgase, beispielsweise mit einer Regenerativen Thermischen Oxidation (RTO) und/oder mit einer Rauchgasentschwefelung (DeSOx), vor dem Entfeuchten und Kühlen der Rauchgase mittels des Kondensationswärmetauschers (6).

4. Verfahren nach einem der Ansprüche 1 bis 3, **dadurch gekennzeichnet, dass** die CCU- bzw. CCS-Einheit (13) zur Absorption von Kohlendioxid in einer Waschflüssigkeit eingerichtet ist.

5. Verfahren nach einem der Ansprüche 1 bis 4, **dadurch gekennzeichnet, dass** die CCU- bzw. CCS-Einheit (13) einen Aminwäscher aufweist.

6. Verfahren nach einem der Ansprüche 1 bis 3, **dadurch gekennzeichnet, dass** die CCU- bzw. CCS-Einheit (13) zur Adsorption von Kohlendioxid an einem Feststoff eingerichtet ist.

7. Verfahren nach einem der Ansprüche 1 bis 6, **dadurch gekennzeichnet, dass** beim Entfeuchten und Kühlen der Rauchgase mittels des Kondensationswärmetauschers (6) gewonnene Wärme für die Desorption des Kohlendioxids herangezogen wird.

8. Verfahren nach Anspruch 7 mit Anspruch 5, **dadurch gekennzeichnet, dass** beim Entfeuchten und Kühlen der Rauchgase mittels des Kondensationswärmetauschers (6) gewonnene Wärme für die Desorption des Kohlendioxids im Aminwäscher herangezogen wird.

9. Verfahren nach einem der Ansprüche 1 bis 8, **dadurch gekennzeichnet, dass** beim Entfeuchten und Kühlen der Rauchgase mittels des Kondensationswärmetauschers (6) gewonnene Wärme zum Trocknen der Rohmaterialien und/oder eines Brennstoffs des Ofens (2) herangezogen wird.

10. Anlage (1) zur Herstellung von Zementklinker, aufweisend:
einen Ofen (2) zum Brennen von Rohmaterialien zu Zementklinker,
einen Vorwärmer (3) zum Vorwärmen der Rohmaterialien mit Rauchgasen des Ofens (2),
**gekennzeichnet durch**
eine Entfeuchtungs- und Kühlungsstufe mit einem Kondensationswärmetauscher (6) zum Entfeuchten und Kühlen von Rauchgasen des Ofens (2), wobei in Strömungsrichtung der Rauchgase nach dem Kondensationswärmetauscher (6) eine Carbon Capture and Utilization (CCU) bzw. Carbon Capture and Storage (CCS)-Einheit (13) zur Abtrennung von Kohlendioxid angeordnet ist.

11. Anlage (1) zur Herstellung von Zementklinker nach Anspruch 10, **gekennzeichnet durch**
eine Rauchgasreinigungsstufe (4), insbesondere eine RTO- und/oder Entschwefelungsstufe, welche zwischen dem Vorwärmer und der Entfeuchtungs- und Kühlungsstufe geschaltet ist.

12. Anlage (1) zur Herstellung von Zementklinker nach Anspruch 10 oder 11, **dadurch gekennzeichnet, dass** der Kondensationswärmetauscher (6) eine Zuleitung (7) und Ableitung (8) für eine Kühlflüssigkeit aufweist, wobei die Ableitung (8) vorzugsweise mit einer CCU- bzw. CCS-Einheit (13), bevorzugt mit einem Aminwäscher, insbesondere mit einem Verdampfer eines Desorbers des Aminwäschers, verbunden ist.

## Claims

1. A method for producing cement clinker, comprising the steps of:
burning raw materials to form cement clinker in a furnace (2),
preheating the raw materials with flue gases from the furnace (2),
**characterised by**
dehumidifying and cooling flue gases from the furnace (2) by means of a condensing heat exchanger (6), wherein the flue gases, after dehumidifying and cooling by means of the condensing heat exchanger (6), are supplied to a Carbon Capture and Utilisation (CCU) or Carbon Capture and Storage (CCS) unit (13) for separating carbon dioxide.

2. The method according to claim 1, **characterised in that** the flue gases are cooled by means of the condensing heat exchanger (6) to a temperature of less than 50°C, in particular less than 45°C, for example less than substantially 40°C.

3. The method according to claim 1 or 2, **characterised by**
cleaning the flue gases, for example with a Regenerative Thermal Oxidation (RTO) and/or with a flue gas desulphurisation (DeSOx) before dehumidifying and cooling the flue gases by means of the condensing heat exchanger (6).

4. The method according to on of the claims 1 to 3 , **characterised in that** the CCU or CCS unit (13) is configured for absorption of carbon dioxide in a scrubbing liquid.

5. The method according to one of the claims 1 to 4, **characterised in that** the CCU or CCS unit (13) comprises an amine scrubber.

6. The method according to one of the claims 1 to 3, **characterised in that** the CCU or CCS unit (13) is configured for adsorption of carbon dioxide on a solid.

7. The method according to any one of claims 1 to 6, **characterised in that** heat obtained during dehumidifying and cooling of the flue gases by means of the condensing heat exchanger (6) is used for the desorption of the carbon dioxide.

8. The method according to claim 7 with claim 5, **characterised in that** heat obtained during dehumidifying and cooling of the flue gases by means of the condensing heat exchanger (6) is used for desorption of the carbon dioxide in the amine scrubber.

9. The method according to any one of claims 1 to 8, **characterised in that** heat obtained during dehumidifying and cooling of the flue gases by means of the condensing heat exchanger (6) is used to dry the raw materials and/or a fuel of the furnace (2).

10. A plant (1) for producing cement clinker, comprising:
a furnace (2) for burning raw materials to form cement clinker,
a preheater (3) for preheating the raw materials with flue gases from the furnace (2),
**characterised by**
a dehumidifying and cooling stage comprising a condensing heat exchanger (6) for dehumidifying and cooling flue gases of the furnace (2), wherein in flowing direction of the flue gases, after the condensing heat exchanger (6), a Carbon Capture and Utilisation (CCU) or Carbon Capture and Storage (CCS) unit (13) for separating carbon dioxide is arranged.

11. The plant (1) for producing cement clinker according to claim 10, **characterised by**
a flue gas cleanup stage (4), in particular an RTO and/or desulphurisation stage, which is interposed between the preheater and the dehumidifying and cooling stage.

12. The plant (1) for producing cement clinker according to claim 10 or 11, **characterised in that** the condensing heat exchanger (6) comprises a feed line (7) and a discharge line (8) for a cooling liquid, wherein the discharge line (8) is preferably connected to a CCU or CCS unit (13), preferably to an amine scrubber, in particular to an evaporator of a desorber of the amine scrubber.

## Revendications

1. Procédé de fabrication de clinker de ciment comprenant les étapes suivantes :
cuisson des matières premières pour obtenir du clinker de ciment dans un four (2),
préchauffage des matières premières avec les gaz de fumées du four (2),
**caractérisé en ce que**
le procédé comprend la déshumidification et le refroidissement des gaz de fumées du four (2) au moyen d'un échangeur de chaleur à condensation (6), les gaz de fumées étant, après déshumidification et refroidissement au moyen de l'échangeur de chaleur à condensation (6), acheminés vers une unité de captage et d'utilisation du carbone (CCU) ou de captage et stockage du carbone (CCS) (13) pour la séparation du dioxyde de carbone.

2. Procédé selon la revendication 1, **caractérisé en ce que** les gaz de fumées sont refroidis au moyen de l'échangeur de chaleur à condensation (6) à une température inférieure à 50°C, en particulier inférieure à 45°C, par exemple inférieure à environ 40°C.

3. Procédé selon la revendication 1 ou 2, **caractérisé en ce que**
les gaz de fumées sont nettoyés, par exemple avec une oxydation thermique régénérative (RTO) et/ou avec une désulfuration des gaz de fumées (DeSOx), avant la déshumidification et le refroidissement des gaz de fumées au moyen de l'échangeur de chaleur à condensation (6).

4. Procédé selon l'une des revendications 1 à 3, **caractérisé en ce que** l'unité CCU ou CCS (13) est configurée pour l'absorption du dioxyde de carbone dans un liquide de lavage.

5. Procédé selon l'une des revendications 1 à 4, **caractérisé en ce que** l'unité CCU ou CCS (13) comprend un laveur à amines.

6. Procédé selon l'une des revendications 1 à 3, **caractérisé en ce que** l'unité CCU ou CCS (13) est configurée pour l'adsorption du dioxyde de carbone sur un solide.

7. Procédé selon l'une des revendications 1 à 6, **caractérisé en ce que** la chaleur obtenue lors de la déshumidification et du refroidissement des gaz de fumées au moyen de l'échangeur de chaleur à condensation (6) est utilisée pour la désorption du dioxyde de carbone.

8. Procédé selon la revendication 7 en combinaison avec la revendication 5, **caractérisé en ce que** la chaleur obtenue lors de la déshumidification et du refroidissement des gaz de fumées au moyen de l'échangeur de chaleur à condensation (6) est utilisée pour la désorption du dioxyde de carbone dans le laveur à amines.

9. Procédé selon l'une des revendications 1 à 8, **caractérisé en ce que** la chaleur obtenue lors de la déshumidification et du refroidissement des gaz de fumées au moyen de l'échangeur de chaleur à condensation (6) est utilisée pour sécher les matières premières et/ou un combustible du four (2).

10. Installation (1) pour la fabrication de clinker de ciment, comprenant :
un four (2) pour calciner des matières premières en clinker de ciment,
un préchauffeur (3) pour préchauffer les matières premières avec les gaz de fumées du four (2),
**caractérisée en ce que**
l'installation comprend une étape de déshumidification et de refroidissement avec un échangeur de chaleur à condensation (6) pour déshumidifier et refroidir les gaz de fumées du four (2), une unité de captage et d'utilisation du carbone (CCU) ou de captage et stockage du carbone (CCS) (13) pour la séparation du dioxyde de carbone étant disposée après l'échangeur de chaleur à condensation (6) dans la direction d'écoulement des gaz de fumées.

11. Installation (1) pour la fabrication de clinker de ciment selon la revendication 10, **caractérisée en ce que**
l'installation comprend une étape de purification des gaz de fumées (4), en particulier une étape RTO et/ou de désulfuration, qui est connectée entre le préchauffeur et l'étape de déshumidification et de refroidissement.

12. Installation (1) pour la fabrication de clinker de ciment selon la revendication 10 ou 11, **caractérisée en ce que** l'échangeur de chaleur à condensation (6) comprend une conduite d'alimentation (7) et une conduite de retour (8) pour un liquide de refroidissement, la conduite de retour (8) étant de préférence reliée à une unité CCU ou CCS (13), de préférence à un laveur à amines, en particulier à un évaporateur d'une colonne de régénération du laveur à amines.
